# EUROPÄISCHE PATENTANMELDUNG

(11) **EP 1 279 535 A2**
(43) Veröffentlichungstag der Anmeldung: **29.01.2003**
(21) Anmeldenummer: 02078291.8
(22) Anmeldetag: 02.07.2002
(51) Int. Cl.: B60J 7/02

(54) **Öffnungsfähige Dachkonstruktion für ein Fahrzeug**

(30) Priorität: 24.07.2001 DE 20112190 U
(71) Anmelder: Inalfa Industries B.V., 5804 AB Venray (NL)
(72) Erfinder: Hermsen, Jacobus Christiaan Leonardus, 5961 CX Horst aan de Maas (NL)
(74) Vertreter: Voncken, Bartholomeus Maria Christiaan

(57) **Zusammenfassung**

Beschrieben wird eine öffnungsfähige Dachkonstruktion für ein Fahrzeug, mit einer in dem Dach des Fahrzeugs ausgebildeten Dachöffnung, die durch ein bewegliches Abschlußorgan (3,4) verschließbar ist, und mit sich am Umfang der Dachöffnung (1) entlang erstreckenden Dichtungsorganen (19), die in geschlossener Stellung des Abschlußorgans (3,4) eine flüssigkeitsdichte Dichtung zwischen diesem Abschlußorgan und dem Dachöffnungsrand (1) gewährleisten. An der Unterseite des Dachs des Fahrzeugs ist eine sich um den Umfang der Dachöffnung erstreckende Rinne (16) ausgebildet ist, die, gesehen in der senkrechten Projektion, innerhalb des Dachöffnungsrands (1) herausragt, wobei an die Rinne (16) wenigstens ein Abfuhrkanal (18) anschließt.

## Beschreibung

Die Erfindung betrifft eine öffnungsfähige Dachkonstruktion für ein Fahrzeug mit einer in dem Dach des Fahrzeugs ausgebildeten Dachöffnung, die durch ein bewegliches Abschlußorgan verschließbar ist, und mit sich am Umfang der Dachöffnung entlang erstreckenden Dichtungsorganen, die in geschlossener Stellung des Abschlußorgans eine flüssigkeitsdichte Dichtung zwischen diesem Abschlußorgan und dem Dachöffnungsrand gewährleisten. Die bei einer solchen bekannten öffnungsfähigen Dachkonstruktion für ein Fahrzeug angewandten Dichtungsorgane sind dazu vorgesehen, das Eindringen von Niederschlagswasser in der geschlossenen Stellung des Abschlußorgans zu verhindern. Häufig sind an der Außenseite (die ist die dem Fahrzeug abgewandte Seite) des Abschlußorgans Abfuhrrinnen oder Abfuhrkanäle für darauf fallendes Niederschlagswasser angebracht. Trotzdem läßt es sich nicht vollständig vermeiden, daß einiges Niederschlagswasser die Dichtungsorgane passiert und das Innere des Fahrzeugs erreicht. Es wird klar sein, daß ein solches Eindringen von Niederschlagswasser in das Fahrzeug unerwünscht ist, sowohl im Hinblick auf den Komfort der Fahrzeuginsassen als auch in technischer Hinsicht (Gefahr der Beschädigung oder Verunreinigung von Fahrzeugkomponenten, wie zum Beispiel Innenverkleidung).

Ebenfalls sind bei den bekannten öffnungsfähigen Dachkonstruktionen keine Mittel vorhanden, das Eindringen von Wasser zu verhindern, wenn sich das Abschlußorgan in einer geöffneten Stellung befindet.

Es ist eine Aufgabe der vorliegenden Erfindung, für die genannte Problematik eine Lösung zu schaffen.

Aus dem Grunde wird nach der Erfindung bei einer öffnungsfähigen Dachkonstruktion der eingangs genannten Gattung vorgeschlagen, daß an der Unterseite des Dachs des Fahrzeugs eine sich um den Umfang der Dachöffnung erstreckende Rinne ausgebildet ist, die, gesehen in der senkrechten Projektion, innerhalb des Dachöffnungsrands herausragt, wobei an die Rinne wenigstens ein Abfuhrkanal anschließt.

Wie schon früher bemerkt worden ist, erstrecken sich die Dichtungsorgane entlang dem Umfang der Dachöffnung. Somit wird gegebenenfalls eindringendes Niederschlagswasser sich ebenfalls im Bereich des Dachöffnungsumfangs befinden, so daß die dort gebildete Rinne dieses eindringende Niederschlagswasser in effektiver Weise auffangen kann und über den wenigstens einen Abfuhrkanal ableiten kann. Dadurch wird, sowohl in einer geöffneten als in einer geschlossenen Stellung des Abschlußorgans das unerwünschte Eindringen von Niederschlagswasser in das Fahrzeuginnere verhindert.

Dabei ist es zu bevorzugen, daß die Rinne mit einer Reihe von Abfuhrkanälen versehen ist, die im Bereich der Ecken der Dachöffnung gelegen sind. Einerseits wird dadurch ausreichende Abfuhrkapazität für Niederschlagswasser erhalten (insbesondere wenn das Abschlußorgan wenigstens teilweise geöffnet ist und große Mengen Niederschlagswasser in die Dachöffnung eindringen können), während andererseits die Abfuhr des Niederschlagswassers an Stellen erfolgt, wo die Abfuhrkanäle einfach an in dem Fahrzeug vorhandene konstruktive Teile angeschlossen werden können, die für die Abfuhr von Niederschlagswasser geeignet gemacht werden können, wie an Türen anschließende Kastenprofile oder dergleichen.

Weiters wird eine bevorzugte Ausführungsform der öffnungsfähigen Dachkonstruktion nach der Erfindung genannt, nach der die Rinne als ein der Form der Dachöffnung angepaßtes Rahmenteil ausgeführt ist. Die Montage der Rinne kann dadurch schnell und einfach, im allgemeinen in einem einzelnen Schritt realisiert werden. Das gleiche gilt in umgekehrter Richtung für eine Demontage der Rinne.

Zur Beschränkung der Anzahl der Bauteile, aus denen die öffnungsfähige Dachkonstruktion nach der Erfindung besteht, wird ebenfalls vorgeschlagen, den Rahmenteil Bestandteil der Innenverkleidung des Dachs des Fahrzeugs sein zu lassen. Auf diese Weise erfüllt der Rahmenteil eine doppelte Funktion, nämlich die Rinnenfunktion für die Abfuhr eintretenden Niederschlagswassers und eine Verarbeitungsfunktion als Teil der Innenverkleidung des Dachs des Fahrzeugs.

Bei einem besonderen Typ der öffnungsfähigen Dachkonstruktion liegt der Dachöffnungsrand eingeschlossen zwischen einem sich im wesentlichen über dem Dach befindenden oberen Rahmen und einem sich im wesentlichen unter dem Dach befindenden unteren Rahmen. In einem solchen Fall schlägt die Erfindung vor, daß der besagte Rahmen den Unterrahmen bildet. Somit wird der Rahmen um eine zusätzliche Funktion ergänzt, nämlich als Teil der Konstruktion, mit der das Abschlußorgan an der festen Dachkonstruktion des Fahrzeugs befestigt wird.

Schließlich kann die öffnungsfähige Dachkonstruktion nach der vorliegenden Erfindung eine des Typs sein, bei der das Abschlußorgan eine um eine Querachse nach außen hin gelenkige Luke ist, wie dies häufig bei LKW und dergleichen verwendet wird.

Die Erfindung wird nachstehend an Hand der Zeichnung erläutert, in der eine Reihe von Ausführungsformen der öffnungsfähigen Dachkonstruktion nach der Erfindung dargestellt ist.
Figur 1 zeigt eine erste Ausführungsform der öffnungsfähigen Dachkonstruktion nach der Erfindung in einer perspektivischen Explosionsansicht;
Figur 2 zeigt perspektivisch einen Teil einer zweiten Ausführungsform der öffnungsfähigen Dachkonstruktion nach der Erfindung;
Figur 3 zeigt einen Querschnitt nach der Linie III-III in der Figur 2, und
Figur 4 zeigt eine dritte Ausführungsform der öffnungsfähigen Dachkonstruktion nach der Erfindung in einem Querschnitt nach der Linie IV-IV in der Figur 2.

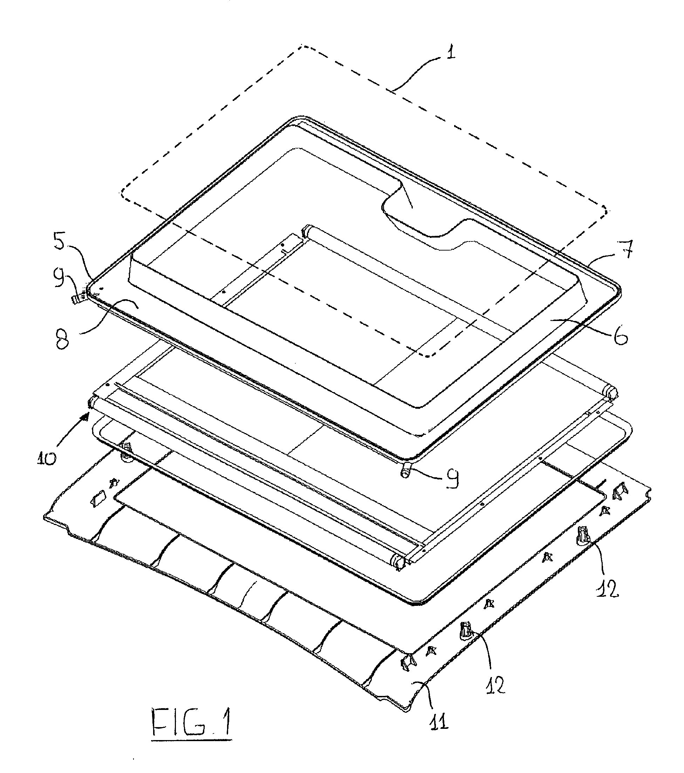

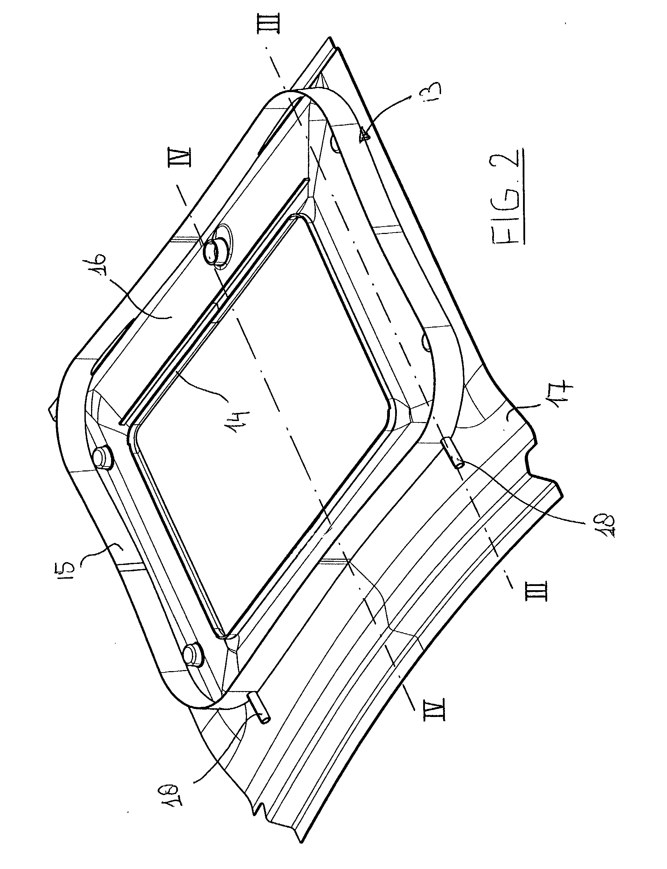

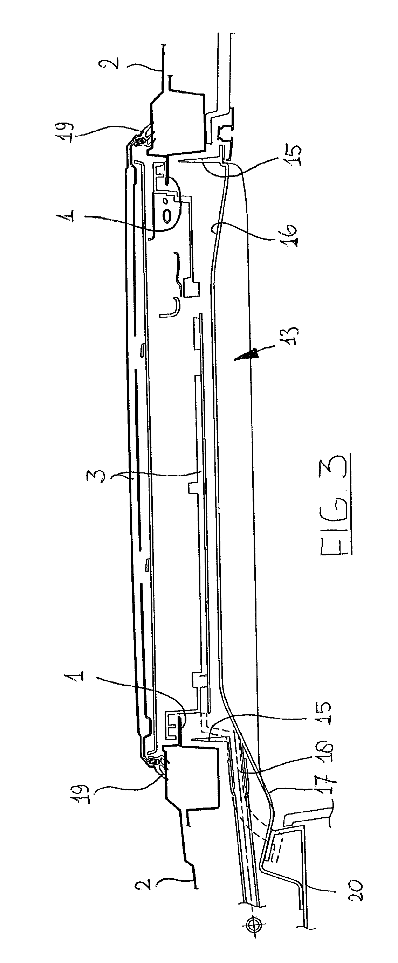

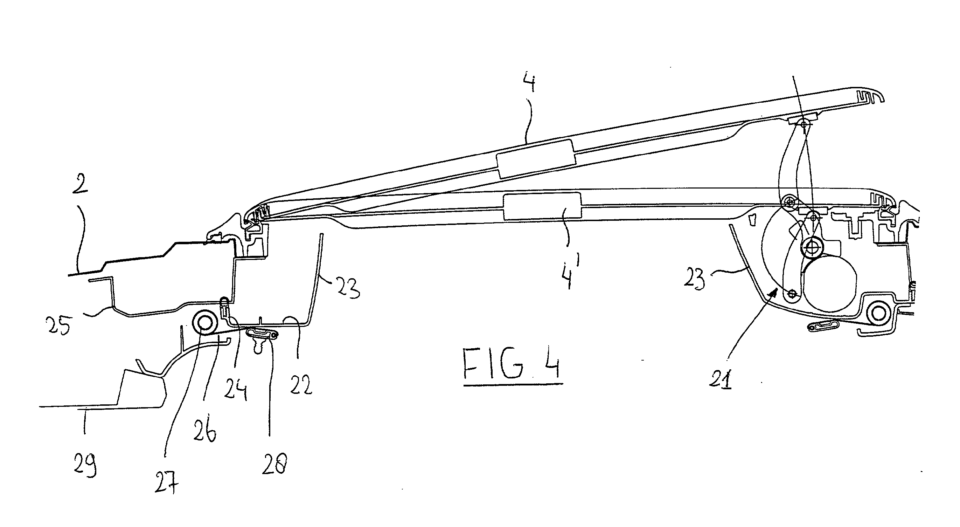

Nunmehr wird zunächst auf die Figur 1 verwiesen. Darin ist mit Punktlinie der Rand 1 einer Dachöffnung dargestellt, die im Dach eines Fahrzeugs ausgebildet ist. Dieses Dach 2 ist unter anderem sichtbar in den Figuren 3 und 4. Die von dem Rand 1 begrenzte Dachöffnung kann durch ein bewegliches Abschlußorgan verschlossen werden, wie die in den Figuren 3 und 4 dargestellten Abschlußorgane 3 beziehungsweise 4. In der Figur 1 ist ein solches Abschlußorgan nicht dargestellt.

Während, wie aus den vorgenannten Figuren 3 und 4 hervorgeht, in den gezeigten Ausführungsformen sich das Abschlußorgan an der Außenseite des festen Dachs 2 des Fahrzeugs befindet, befindet sich an der Innenseite dieses festen Dachs ein Rahmenteil 5. Dieses Rahmenteil hat einen inneren aufragenden Rand 6 und einen äußeren aufragenden Rand 7. Zwischen beiden Rändern 6 und 7 wird auf diese Weise eine umlaufende Rinne 8 gebildet. Im Bereich von zwei Ecken des Rahmenteils 5 sind Abfuhrkanäle 9 gebildet, die sich durch den äußeren Rand 7 hindurch erstrecken.

Unter dem Rahmenteil 5 ist in der Figur 1 ein Sonnenschutzschirmmechanismus 10 angedeutet, der im Rahmen der vorliegenden Erfindung unerheblich ist und folglich keiner näheren Erläuterung bedarf.

Unter dem Sonnenschutzschirmmechanismus 10 befindet sich ein Abdeckrahmen 11 mit Befestigungsnocken 12.

Wenn die in der Figur 1 dargestellte öffnungsfähige Dachkonstruktion in einem Fahrzeug montiert, dann wird der Abdeckrahmen 11 mittels der Befestigungsnocken 12 an der festen Dachkonstruktion des Fahrzeugs befestigt. Dabei werden der Rahmenteil 5 und der Sonnenschutzschirmmechanismus 10 zwischen der festen Dachkonstruktion und dem Abdeckrahmen 11 eingeschlossen. In einer senkrechten Projektion befindet sich jedoch der innere aufragende Rand 6 des Rahmenteils 5 innerhalb des Dachöffnungsrands 1.

In der Figur 2 ist eine alternative Ausführungsform der öffnungsfähigen Dachkonstruktion teilweise dargestellt. In diesem Fall sind ein Teil gemäß dem Rahmenteil 5 in der Figur 1 und ein Teil gemäß dem Abdeckrahmen 11 in der Figur 1 zu einem einzelnen Rahmenteil 13 mit innerem Rand 14, äußerem Rand 15, dazwischen gebildeter Rinne 16, Montageplatte 17 und Abfuhrkanälen 18 kombiniert.

Zum näheren Verständnis des Prinzips der vorliegenden Erfindung wird nunmehr auf die Figuren 3 und 4 verwiesen. In der Figur 3 ist sichtbar, wie das betreffende Abschlußorgan 3 in geschlossener Stellung mittels Dichtungsorganen 19 in dichtender Weise an das feste Dach 2 eines Fahrzeugs anschließt. Unter der vom Rand 1 definierten Dachöffnung befindet sich der kombinierte Rahmenteil 13, wovon in der Figur 3 klar der äußere aufragende Rand 15 sichtbar ist. Links in der Figur 3 ist zu erkennen, wie die Montageplatte 17 des Rahmenteils 13 an eine Innenverkleidung 20 des Fahrzeugs anschließt. In der unmittelbaren Nähe der Dachöffnung bildet das Rahmenteil 13 selbst die Innenverkleidung des Dachs des Fahrzeugs.

In der in der Figur 3 dargestellten geschlossenen Stellung des Abschlußorgans 3 unverhofft die Dichtungsorgane 19 passierendes Niederschlagswasser wird von der Rinne 16 aufgefangen und über die Abfuhrkanäle 18 zu einer nicht im einzelnen dargestellten Stelle abgeleitet. Dasselbe gilt in einer geöffneten Stellung des Abschlußorgans 3.

Obwohl die Figur 4 ein Querschnitt nach der Linie IV-IV in der Figur 2 ist, ist dies kein Querschnitt durch eine Ausführungsform, die genau der in der Figur 2 dargestellten Ausführungsform entspricht. Sichtbar ist ein Abschlußorgan 4, das mittels eines schematisch dargestellten Bedienungsmechanismus 21 um eine Querachse gelenkig ist (quer zu der Ebene der Zeichnung gerichtete Achse) zwischen einer geschlossenen Stellung (untere Position 4') und einer geöffneten Stellung (obere Position 4). Links in der Figur 4 ist erneut ein Teil einer Rinne 22 sichtbar, die von einem inneren aufragenden Rand 23 und einem äußeren aufragenden Rand 24 begrenzt wird. Der innere aufragende Rand 23 schließt an einen mit dem festen Dach 2 verbundenes Konstruktionsteil 25 an. Weiters ist in der Figur 4 ein Sonnenschutzschirm 26 mit Wickelachse 27 und Bedienungsgriff 28 dargestellt, und ist ein Teil der Innenverkleidung 29 sichtbar.

Die Erfindung ist nicht auf die vorstehend beschriebenen Ausführungsformen beschränkt, die innerhalb des durch die Ansprüche bestimmten Rahmens der Erfindung in vielfacher Weise variiert werden können.

## Patentansprüche

1. Öffnungsfähige Dachkonstruktion für ein Fahrzeug mit einer in dem Dach des Fahrzeugs ausgebildeten Dachöffnung, die durch ein bewegliches Abschlußorgan verschließbar ist, und mit sich am Umfang der Dachöffnung entlang erstreckenden Dichtungsorganen, die in geschlossener Stellung des Abschlußorgans eine flüssigkeitsdichte Dichtung zwischen diesem Abschlußorgan und dem Dachöffnungsrand gewährleisten, **dadurch gekennzeichnet, daß** an der Unterseite des Dachs des Fahrzeugs eine sich um den Umfang der Dachöffnung erstreckende Rinne ausgebildet ist, die, gesehen in der senkrechten Projektion, innerhalb des Dachöffnungsrands herausragt, wobei an die Rinne wenigstens ein Abfuhrkanal anschließt.

2. Öffnungsfähige Dachkonstruktion nach Anspruch 1, **dadurch gekennzeichnet, daß** die Rinne mit einer Reihe von Abfuhrkanälen versehen ist, die im Bereich der Ecken der Dachöffnung gelegen sind.

3. Öffnungsfähige Dachkonstruktion nach Anspruch 1 oder 2, **dadurch gekennzeichnet, daß** die Rinne als ein der Form der Dachöffnung angepaßtes Rahmenteil ausgeführt ist.

4. Öffnungsfähige Dachkonstruktion nach Anspruch 3, **dadurch gekennzeichnet, daß** das Rahmenteil Teil der Innenverkleidung des Dachs des Fahrzeugs ist.

5. Öffnungsfähige Dachkonstruktion nach Anspruch 3 oder 4, wobei der Dachöffnungsrand zwischen einem sich im wesentlichen über dem Dach befindenden oberen Rahmen und einem sich im wesentlichen unter dem Dach befindenden unteren Rahmen eingeschlossen ist, **dadurch gekennzeichnet, daß** der genannte Rahmen den unteren Rahmen bildet.

6. Öffnungsfähige Dachkonstruktion nach einem der vorigen Ansprüche, **dadurch gekennzeichnet, daß** das Abschlußorgan eine um eine Querachse nach außen hin gelenkige Luke ist.
